# EUROPÄISCHE PATENTSCHRIFT

(11) **EP 1 779 732 B1**
(45) Veröffentlichungstag und Bekanntmachung des Hinweises auf die Patenterteilung: **25.05.2011**
(21) Anmeldenummer: 06021240.4
(22) Anmeldetag: 10.10.2006
(51) Int. Cl.: A21C 3/08, A21C 11/16

(54) **Pressvorrichtung für eine Anlage zur Herstellung von Gebäckstangen**
Pressing device for a plant for producing pastry strands.
Dispositif de pressage pour une installation de fabrication de barres de pâte

(30) Priorität: 29.10.2005 DE 102005051963
(43) Veröffentlichungstag der Anmeldung: 02.05.2007
(73) Patentinhaber: Werner & Pfleiderer Industrielle Backtechnik GmbH, 71732 Tamm (DE)
(72) Erfinder: Horna, Marc, 74360 Ilsfeld (DE)
(74) Vertreter: Hofmann, Matthias

(56) Entgegenhaltungen:
- EP-A- 0 389 741
- DE-A1- 19 936 815
- DE-A1- 19 936 829
- US-A- 5 609 903
- US-B1- 6 626 660

## Beschreibung

Die Erfindung betrifft eine Pressvorrichtung für eine Anlage zur Herstellung von Gebäckstangen nach dem Oberbegriff des Anspruches 1.

Derartige Pressvorrichtungen sind bekannt aus der DE 199 36 829 C2 und der DE 199 36 815 C2. Gebäckstangen, die mit Hilfe derartiger bekannter Pressvorrichtungen hergestellt werden können, sind insbesondere klassische Salzstangen, sogenannte Sticks. Derartige Pressvorrichtungen haben eine Mehrzahl nebeneinander liegender Düsen-Drehköpfe, so dass gleichzeitig eine Mehrzahl von Teigsträngen ausgepresst werden kann, die anschließend weiter zu Gebäckstangen verarbeitet werden. Es besteht kundenseitig der Bedarf nach einer im Vergleich zum Stand der Technik kompakteren Pressvorrichtung, bei der eine gegebene Anzahl von Teigsträngen auf engerem Raum ausgepresst werden kann.

Es ist daher eine Aufgabe der vorliegenden Erfindung, eine Pressvorrichtung der eingangs genannten Art bei gleichem Durchsatz kompakter auszugestalten.

Diese Aufgabe ist erfindungsgemäß gelöst durch eine Pressvorrichtung mit den im Kennzeichnungsteil des Anspruchs 1 angegebenen Merkmalen.

Durch den Einsatz der drehantreibbaren Düsen mit mehreren Düsenöffnungen lassen sich Sticks herstellen, die aus einer Mehrzahl von Einzelsträngen bestehen, die in Form einer Mehrfach-Helix umeinander geschlungen sind. Durch die Anzahl der Düsen sowie durch die Drehgeschwindigkeit des Drehkopfes und die Auspressgeschwindigkeit des Teiges lässt sich die genaue Gestalt der hergestellten Gebäckstangen variieren. Die erfindungsgemäße Pressvorrichtung ermöglicht daher die Herstellung einer Vielzahl von Gebäckstangen-Varianten. Es ist insbesondere eine kontinuierliche Herstellung möglich. Neben den der Drehachse benachbarten Düsenöffnungen kann auch eine zentrale Düsenöffnung längs der Drehachse vorgesehen sein. Der Drehantrieb für die Drehköpfe mit dem Endlos-Zugorgan gewährleistet einen sicheren und insbesondere synchronen Antrieb einer Mehrzahl von Düsen. Die erfindungsgemäße Unterteilung des Endlos-Zugorgans in mehrere Zugabschnitte ermöglicht eine dichte Packung von Dosierköpfen, da die Drehköpfe in verschiedene Gruppen zusammengefasst werden können. Insbesondere können Abstände zwischen den Drehachsen benachbarter Dosierköpfe im Bereich zwischen 20 mm und 30 mm realisiert werden.

Ein Dreh-Einsatz nach Anspruch 2 sorgt für reproduzierbare Verhältnisse bei der Herstellung der Gebäckstangen. Die Lagerung des Drehkopfes kann insbesondere durch Gleitlager erfolgen.

Eine versetzte Anordnung der Antriebsritzel nach Anspruch 3 stellt eine bevorzugte, eine dichte Packung ermöglichende Drehkopfanordnung dar. Aufgrund des Versatzes der Antriebsritzel können die Antriebsritzel einander benachbarter Drehköpfe einander überlappen, ohne dass dies zu einer Beeinträchtigung des Drehantriebes führt.

Eine Ausbildung des Antriebs nach Anspruch 4 gewährleistet eine sichere Führung des Endlos-Zugorgans.

Entsprechendes gilt beim Einsatz eines Führungssteges nach Anspruch 5.

Ein Ausführungsbeispiel der Erfindung wird nachfolgend anhand der Zeichnung näher erläutert. In dieser zeigen:
- Fig. 1: schematisch einen Ausschnitt aus einer Anlage zur Herstellung von Gebäckstangen im Bereich einer Pressvorrichtung;
- Fig. 2: eine Seitenansicht von insgesamt vier Drehköpfen zum Auspressen jeweils eines Gebäckstrangs sowie eines Trumms eines Endlos-Zugorgans zum Drehantrieb dieser Drehköpfe; und
- Fig. 3: eine Ausschnittsvergrößerung aus Fig. 1.

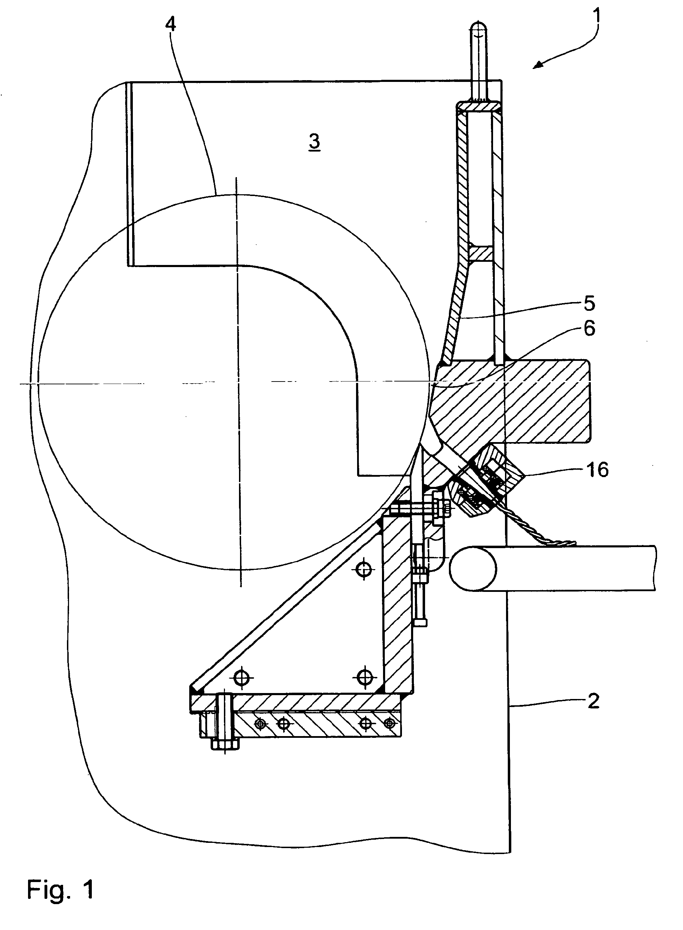

Eine in Fig. 1 schematisch dargestellte Pressvorrichtung 1 ist Teil einer ansonsten nicht dargestellten Anlage zur Herstellung von Gebäckstangen. Auf ein Maschinengehäuse 2 mit einem Maschinenrahmen der Pressvorrichtung 1 ist ein Zuführtrichter aufgesetzt, der in der Zeichnung nicht dargestellt ist, und über den Teig einer Vorratskammer 3 zugeführt wird. Alternativ zu einer Beschickung der Pressvorrichtung 1 über den Zuführtrichter kann auch eine direkte manuelle Beschickung in die Vorratskammer 3 erfolgen.

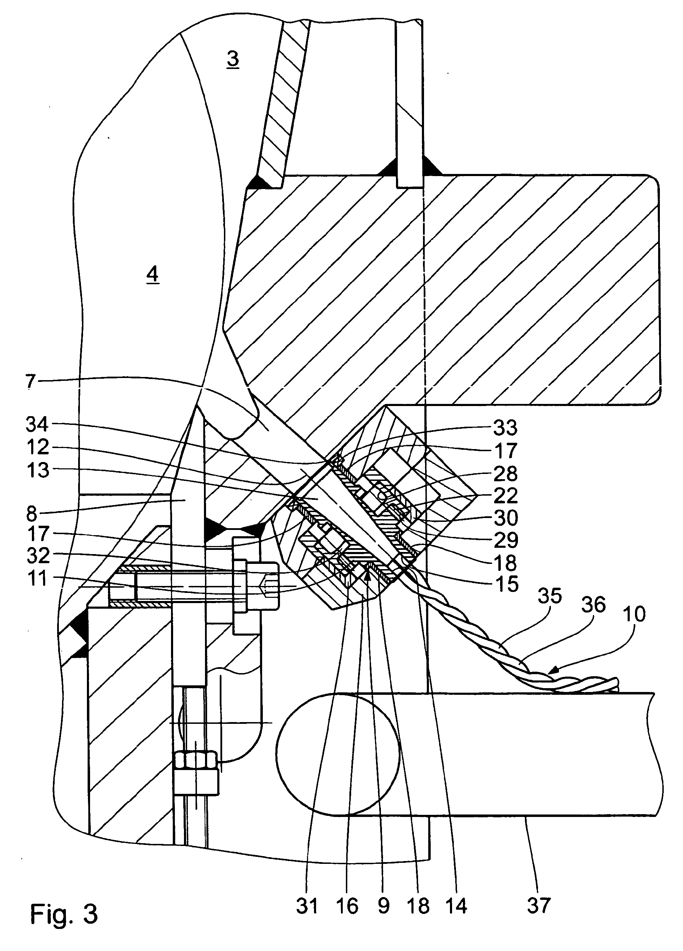

Als Druckerzeugungseinrichtung ist, beiderseits am Maschinenrahmen gelagert, eine Riffelwalze 4 angeordnet, die in Fig. 1 schematisch und insbesondere ohne Riffelung dargestellt ist. Aus der Blickrichtung nach Fig. 1 gesehen dreht sich die Riffelwalze 4 im Uhrzeigersinn. In einem Umfangsbereich, der in Fig. 1 in etwa einem oberen rechten Quadranten entspricht, steht die Riffelwalze 4 mit dem Teig in der Vorratskammer 3 in Förderverbindung. Die Vorratskammer 3 verjüngt sich, in Fig. 1 nach links von der Riffelwalze 4 und nach rechts von einer druckstabilen Wand 5 begrenzt, nach unten. Über eine Engstelle 6 am Ort der stärksten Verjüngung steht die Vorratskammer 3 mit einer Teig-Druckkammer 7 in Verbindung, die sich in den Fig. 1 und 3 von der Riffelwalze 4 aus nach rechts unten erstreckt.

Im Bereich der Teig-Druckkammer 7 steht die Riffelwalze 4 weiterhin mit dem Teig in Förderkontakt. Stromabwärts begrenzt ein stationäres Abstreif-Messer 8, welches der Riffelwalze 4 unter geringstem Spiel benachbart ist, die Teig-Druckkammer 7.

Abgabeseitig steht die Teig-Druckkammer 7 mit einer in den Fig. 1 und 3 dargestellten Düse 9 zum Auspressen eines Gebäckstrangs 10 in Verbindung. Die Düse 9 hat einen Drehkopf 11, der angetrieben um eine Drehachse 12 drehbar ist. Die Drehachse 12 fällt mit einer Rotationssymmetrieachse des Drehkopfs 11 zusammen. Ein mit der Teig-Druckkammer 7 in Verbindung stehender Innenraum 13 der Düse 9 verjüngt sich konisch hin zu zwei abgabeseitigen Düsenöffnungen 14, 15. Letztere sind der Drehachse 12 benachbart angeordnet.

Der Drehkopf 11 ist als Dreh-Einsatz in einem Düsengehäuse 16 ausgeführt. Über ein eingangsseitiges erstes Gleitlager 17 und ein die Düsenöffnungen 14, 15 umgebendes abgabeseitiges zweites Gleitlager 18 ist der Drehkopf 11 im Düsengehäuse 16 axial und radial gelagert. Die Gleitlager 17, 18 sind als Gleithülsen ausgeführt.

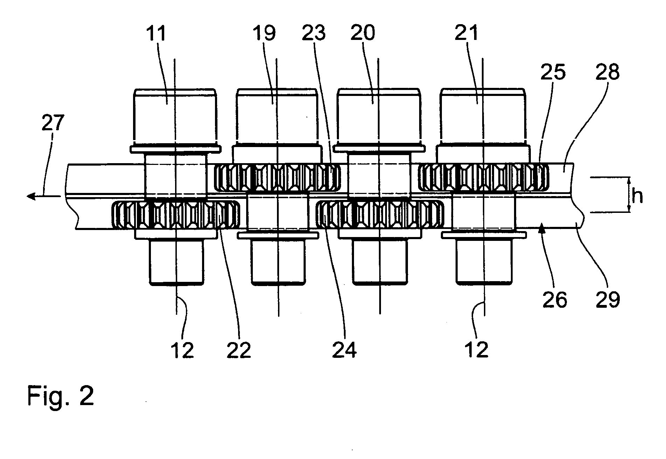

Senkrecht zur Zeichenebene der Fig. 1 und 3 ist eine Mehrzahl von gleich aufgebauten Düsen 9 nebeneinander angeordnet, die vom gemeinsamen Düsengehäuse 16 aufgenommen sind. Die Seitenansicht der Fig. 2 zeigt neben dem Drehkopf 11 noch weitere Drehköpfe 19 bis 21 dieser Düsen.

Bei der Pressvorrichtung 1 sind in der Regel mehr als vier Drehköpfe vorgesehen. Es können zum Beispiel 40 Drehköpfe auf einer Arbeitsbreite senkrecht zur Zeichenebene der Figuren 1 und 3 zwischen 1000 mm und 1200 mm vorgesehen sein. Die Drehköpfe 11 sowie 19 bis 21 sind allesamt um zueinander parallele Drehachsen angetrieben drehbar, die in der Zeichnung sämtlich mit der Bezugsziffer 12 bezeichnet werden.

Ein Drehantrieb für die Drehköpfe 11 sowie 19 bis 21 hat ein über Antriebsritzel 22 bis 25 jedes Drehkopfes 11, 19 bis 21 laufendes und als Riemen 26 bzw. metallische Zahnkette ausgebildetes Endlos-Zugorgan. Der Riemen 26 ist senkrecht zu seinem Laufweg 27 und parallel zur Zeichenebene der Fig. 2 in zwei Zugabschnitte 28, 29 unterteilt, wobei der Zugabschnitt 28 der Eingangsseite der Drehköpfe 11, 19 bis 21 und der Zugabschnitt 29 der Abgabeseite der Drehköpfe 11, 19 bis 21 zugewandt ist. Die Antriebsritzel 22 bis 25 zueinander benachbarter Drehköpfe 11, 19 bis 21 sind um einen Abstand h zueinander höhenversetzt. Bei einer ersten Drehkopf-Gruppe mit den Drehköpfen 11 und 20 sind daher die Antriebsritzel 22, 24 in Fig. 2 nach unten gegenüber den mehr eingangsseitig angeordneten Antriebsritzeln 23, 25 der zweiten Drehkopf-Gruppe mit den Drehköpfen 19, 21 versetzt angeordnet. Der Versatz h entspricht dem Abstand der beiden Zugabschnitte 28, 29 des Riemens 26 zueinander. Der Zugabschnitt 29 läuft über die Antriebsritzel 22, 24 der Drehköpfe 11, 20 der ersten Drehkopf-Gruppe. Der Zugabschnitt 28 läuft über die Antriebsritzel 23, 25 der Drehköpfe 19, 21 der zweiten Drehkopf-Gruppe. Daher ist der Zugabschnitt 29 des Riemens 26 zum Antrieb der ersten Drehkopf-Gruppe und der zweite Zugabschnitt 28 zum Antrieb der zweiten Drehkopf-Gruppe ausgebildet.

Die beiden Zugabschnitte 28, 29 sind auf einer Innenseite des Riemens 26 angeordnet. Außenseitig stützen sich die Zugabschnitte 28, 29 über zwei Gleitschienen 30, 31 gegen das Düsengehäuse 16 ab. Die beiden Zugabschnitte 28, 29 sind durch einen Führungssteg 32 voneinander getrennt.

Zur Abdichtung der Drehköpfe 11, 19 bis 21 gegen das Düsengehäuse 16 dient jeweils ein Dichtring 33, der eingangsseitig um den jeweiligen Drehkopf 11, 19 bis 21, benachbart zum Gleitlager 17, in eine Umfangsausnehmung 34 in das Düsengehäuse 16 eingelegt ist.

Bei der Gebäckstangen-Herstellung wird der Teig durch die Düsen 9 ausgepresst. Dabei werden die Drehköpfe 11, 19 bis 21, angetrieben durch den Riemen 26 und einen nicht dargestellten Motor, in Drehung versetzt. Diese Drehung bewirkt, dass sich Einzelstränge 35, 36, die aus den Düsenöffnungen 14, 15 ausgepresst werden, nach den Drehköpfen 11, 19 bis 21 umeinander in Form einer Mehrfach-Helix zum Gebäckstrang 10 verdrillen. Letzterer wird von einem angetriebenen Endlos-Förderband 37 zum Backen des Gebäckstrangs 10 weiter transportiert. Neben einem Backofen weist die Anlage zur Herstellung der Gebäckstangen noch eine Abkühl- und Verpackungseinrichtung auf.

Alle Düsen 9 stehen mit der Teig-Druckkammer 7 in Verbindung. Je nach Anzahl der Düsen 9 kann mit der Pressvorrichtung 1 eine entsprechende Anzahl von Gebäcksträngen 10 gleichzeitig ausgepresst und mit dem Endlos-Förderband 37 weitergefördert werden.

## Patentansprüche

1. Pressvorrichtung (1) für eine Anlage zur Herstellung von Gebäckstangen
- mit einer Vorratskammer (3) für Teig,
- mit einer Druckerzeugungseinrichtung (4) zur Erzeugung von Druck in einer Teig-Druckkammer (7), die mit der Vorratskammer (3) in Verbindung steht,
- mit einer Mehrzahl von Düsen (9) zum Auspressen jeweils eines Gebäckstranges (10), die eingangsseitig mit der Teig-Druckkammer (7) in Verbindung stehen,
- wobei jede Düse (9) abgabeseitig einen angetrieben um eine Drehachse (12) drehbaren Drehkopf (11, 19 bis 21) mit mindestens zwei der Drehachse (12) benachbarten Düsenöffnungen (14, 15) aufweist,
- wobei ein Drehantrieb für die Drehköpfe (11, 19 bis 21) ein über ein Antriebsritzel (22 bis 25) jedes Drehkopfes (11, 19 bis 21) laufendes Endlos-Zugorgan (26) aufweist,
**dadurch gekennzeichnet, dass**
- das Endlos-Zugorgan (26) senkrecht zu seinem Laufweg (27) in mindestens zwei Zugabschnitte (28, 29) unterteilt ist,
- wobei ein erster Zugabschnitt (29) des Endlos-Zugorgans (26) zum Antrieb einer ersten Gruppe von Drehköpfen (11, 20) und ein zweiter Zugabschnitt (28) des Endlos-Zugorgans (26) zum Antrieb einer zweiten Gruppe von Drehköpfen (19, 21) ausgebildet ist.

2. Pressvorrichtung nach Anspruch 1, **dadurch gekennzeichnet, dass** der Drehkopf (11, 19 bis 21) als Dreh-Einsatz in einem Düsengehäuse (16) ausgeführt ist, wobei der Dreh-Einsatz (11, 19 bis 21) im Düsengehäuse (16) axial und radial gelagert ist.

3. Pressvorrichtung nach Anspruch 1 oder 2, **dadurch gekennzeichnet, dass** die beiden Zugabschnitte (28, 29) nebeneinander angeordnet sind, wobei die Antriebsritzel (22 bis 25) der Drehköpfe (11, 19 bis 21) der beiden Gruppen um den Abstand (h) der beiden Zugabschnitte (28, 29) zueinander längs der jeweiligen Drehachsen (12) versetzt angeordnet sind.

4. Pressvorrichtung nach einem der Ansprüche 1 bis 3, **dadurch gekennzeichnet, dass** die beiden Zugabschnitte (28, 29) auf einer Innenseite des Endlos-Zugorgans (26) angeordnet sind, wobei sie sich außenseitig über mindestens eine Gleitschiene (30, 31) abstützen.

5. Pressvorrichtung nach Anspruch 3 oder 4, **dadurch gekennzeichnet, dass** die beiden Zugabschnitte (28, 29) durch einen Führungssteg (32) voneinander getrennt sind.

## Claims

1. Pressing device (1) for a system for producing pastry strands, comprising
- a storage chamber (3) for dough;
- a pressure generation device (4) for generating pressure in a dough pressure chamber (7) which is connected with the storage chamber (3);
- a plurality of nozzles (9) for pressing out in each case one pastry strand (10), the nozzles (9) being connected with the dough pressure chamber (7) at their inlet side;
- with each nozzle (9) comprising a rotary head (11, 19 to 21) on its outlet side which is rotatable when driven about an axis of rotation (12), the rotary head (11, 19 to 21) comprising at least two nozzle openings (14, 15) which are adjacent to the axis of rotation (12);
- with a rotary drive for the rotary heads (11, 19 to 21) comprising an endless traction member (26) which runs over a drive pinion (22 to 25) of each rotary head (11, 19 to 21),
**characterized in that**
- the endless traction member (26) is divided into at least two traction portions (28, 29) in a direction perpendicular to its running path (27);
- with a first traction portion (29) of the endless traction member (26) being configured for driving a first group of rotary heads (11, 20) and a second traction portion (28) of the endless traction member (26) being configured for driving a second group of rotary heads (19, 21).

2. Pressing device according to claim 1, **characterized in that** the rotary head (11, 19 to 21) is embodied as a rotary insert in a nozzle housing (16), with the rotary insert (11, 19 to 21) being radially and axially mounted in the nozzle housing (16).

3. Pressing device according to claim 1 or 2, **characterized in that** the two traction portions (28, 29) are arranged next to each other, with the drive pinions (22 to 25) of the rotary heads (11, 19 to 21) of the two groups being offset relative to each other along the respective axes of rotation (12) by the distance (h) of the two traction portions (28, 29).

4. Pressing device according to one of claims 1 to 3, **characterized in that** the two traction portions (28, 29) are arranged on an inside of the endless traction member (26), with the outsides of the traction portions (28, 29) being supported in at least one sliding rail (30, 31).

5. Pressing device according to claim 3 or 4, **characterized in that** the two traction portions (28, 29) are separated from each other by a guiding bar (32).

## Revendications

1. Dispositif de pressage (1) pour une installation de fabrication de barres de pâte, comprenant
- une chambre de réserve (3) pour pâte,
- un dispositif de génération de pression (4) pour la génération de pression dans une chambre de pression pour pâte (7) qui est en liaison avec la chambre de réserve (3),
- une pluralité de buses (9) destinées à éjecter respectivement une barre de pâte (10), qui sont reliées du côté de l'entrée à la chambre de pression pour pâte (7),
- chaque buse (9) présentant, du côté de la sortie, une tête rotative (11, 19 à 21) entraînée de sorte à tourner autour d'un axe de rotation (12) avec au moins deux ouvertures de buse (14, 15) contiguës à l'axe de rotation (12),
- un entraînement rotatif pour les têtes rotatives (11, 19 à 21) présentant un organe de traction sans fin (26) s'étendant au-dessus d'un pignon d'entraînement (22 à 25) de chaque tête rotative (11, 19 à 21), **caractérisé en ce que**
- l'organe de traction sans fin (26) est divisé, perpendiculairement à son parcours (27), en au moins deux sections de traction (28, 29),
- une première section de traction (29) de l'organe de traction sans fin (26) étant réalisée pour l'entraînement d'un premier groupe de têtes rotatives (11, 20) et une seconde section de traction (28) de l'organe de traction sans fin (26) étant réalisée pour l'entraînement d'un second groupe de têtes rotatives (19, 21).

2. Dispositif de pressage selon la revendication 1, **caractérisé en ce que** la tête rotative (11, 19 à 21) est réalisée comme un insert rotatif dans un boîtier de buse (16), l'insert rotatif (11, 19 à 21) étant logé axialement et radialement dans le boîtier de buse (16).

3. Dispositif de pressage selon la revendication 1 ou 2, **caractérisé en ce que** les deux sections de traction (28, 29) sont disposées l'une à côté de l'autre, les pignons d'entraînement (22 à 25) des têtes rotatives (11, 19 à 21) des deux groupes étant disposés en déport de la distance (h) entre les deux sections de traction (28, 29) l'une par rapport à l'autre le long des axes de rotation (12) respectifs.

4. Dispositif de pressage selon l'une quelconque des revendications 1 à 3, **caractérisé en ce que** les deux sections de traction (28, 29) sont disposées sur un côté intérieur de l'organe de traction sans fin (26), celles-ci s'appuyant côté extérieur sur au moins un guidage de glissement (30, 31).

5. Dispositif de pressage selon la revendication 3 ou 4, **caractérisé en ce que** les deux sections de traction (28, 29) sont séparées l'une de l'autre par une traverse de guidage (32).
